**Europäisches Patentamt**

**European Patent Office**

**Office européen des brevets**

(19)

(11) Veröffentlichungsnummer: **0 121 665**
**A2**

(12) ## EUROPÄISCHE PATENTANMELDUNG

(21) Anmeldenummer: **84100986.3**

(22) Anmeldetag: **01.02.84**

(51) Int. Cl.³: **B 23 B 29/04**

(30) Priorität: **10.02.83 DE 3304535**
**09.06.83 DE 3320823**

(43) Veröffentlichungstag der Anmeldung: **17.10.84**
**Patentblatt 84/42**

(84) Benannte Vertragsstaaten: **AT CH DE FR GB IT LI SE**

(71) Anmelder: **SMW Schneider & Weisshaupt GmbH,**
**Wiesentalstrasse 28, D-7996 Meckenbeuren (DE)**

(72) Erfinder: **Hiestand, Karl, Mühlweg 2, D-7798 Pfullendorf**
**(DE)**

(74) Vertreter: **Engelhardt, Guido, Dipl.-Ing.,**
**Montafonstrasse 35 Postfach 1350,**
**D-7990 Friedrichshafen 1 (DE)**

(54) **Vorrichtung zum Einspannen von Wechselkassetten.**

(57) Zum Einspannen einer mit einem Werkzeug (8) bestückten Wechselkassette (6) in einem in einem Werkzeugträger (1) eingesetzten Werkzeughalter (3) ist ein axial verstellbarer Zuganker (21) vorgesehen, der mittels radial verschiebbarer Klemmkörper (33) mit dem Werkzeughalter (3) verspannbar ist. Dazu dient ein Spannkolben (32), durch den über Schrägflächen (37, 40) die Klemmkörper (33) zwischen dem Werkzeughalter (3) und dem Zuganker (21) verspannt und in Einspannlage der Wechselkassette (6) verriegelt werden.

Die Einspannung einer Wechselkassette (6) ist auf diese Weise ohne großen Kraftaufwand zu bewerkstelligen.

**DIPL.-ING. GUIDO ENGELHARDT PATENTANWALT**

**7990 Friedrichshafen**

SMW Schneider & Weißhaupt
GmbH

7996 Meckenbeuren

Vorrichtung zum Einspannen von Wechselkassetten

Die Erfindung bezieht sich auf eine Vorrichtung zum
Einspannen von mit Bearbeitungswerkzeugen bestückten
Wechselkassetten in einem Werkzeugträger einer Werkzeugmaschine mit in diesen eingesetzten Werkzeughaltern,
mit denen die Wechselkassetten jeweils über einen in
Achsrichtung verstellbar angeordneten Zuganker einspannbar sind.

Die Verspannung eines Zugankers mit einem Werkzeughalter
wird bisher mittels Druckschrauben oder Druckfedern
bewerkstelligt, die sich an diesen abstützen. Die Druckschrauben sind hierbei jeweils in einer zur Längsachse
des Zugankers geneigt verlaufenden in den Werkzeughaltereingearbeiteten Gewindebohrung eingeschraubt und
wirken mit ihrem freien Ende auf den mit einer diese
aufnehmenden Aussparung versehenen Zuganker ein. Das
Verspannen und Lösen der Wechselkassette, in die der
Zuganker eingreift, ist bei dieser Ausgestaltung somit
nur von Hand möglich und erfordert jeweils einen erheblichen
Zeitaufwand, ein selbsttätiger Werkzeugwechsel kann daher

./.

- 2        0121665

nicht vorgenommen werden. Dagegen kann, um eine
Wechselkassette von dem Zuganker mit Hilfe eines Handhabungsgerätes abnehmen zu können, die Spannkraft der
über mit dem Zuganker fest verbundenen Zwischenglieder
auf diesen in Einspannlage einwirkenden aus einem
Tellerfederpaket bestehenden Druckfedern mit Hilfe einer
gesondert zustellbaren Betätigungseinrichtung in Form
eines von Druckmittel beaufschlagbaren mit einem Druckübersetzer versehenen Kolbens überwunden werden. Der
dazu erforderliche Bauaufwand ist aber erheblich. Vor
allem ist hierbei von Nachteil, daß der Werkzeugträger,
um die in ihrem Außendurchmesser groß bauenden Druckfedern aufnehmen zu können, in besonderer Weise ausgebildet sein muß und damit als Sonderkonstruktion teuer
in der Herstellung ist und daß bei jedem Werkzeugwechsel von der Betätigungseinrichtung, mittels der
die Kraft der Druckfedern zu überwinden ist, einseitig
auf den Werkzeugträger eine hohe, der ständig an diesem
sich abstützenden Spannkraft entgegenwirkende Kraft
ausgeübt wird. Und da das selbsttätige Wechseln einer
mit einem Werkzeug bestückten Kasette in kurzer Zeit
erfolgen soll, wirkt dabei auf den Werkzeugträger jeweils schlagartig ein hohes Kippmoment ein, durch das
dessen Lagerung stark beansprucht und die Einstellung
der anderen Werkzeuge mitunter verändert wird. Außerdem
kann bei großer Auskragung eines Werkzeuges die Kraft
der Druckfedern mitunter überwunden werden, so daß
eine eingespannte Kassette nicht fest genug eingespannt
ist und Fertigungsungenauigkeiten unumgänglich sind.

Aufgabe der Erfindung ist es daher, eine Vorrichtung zum
Einspannen von Wechselkassetten der eingangs genannten Art
zu schaffen, mittels der diese nicht nur stets sicher
und lageorientiert in einem Werkzeugträger einzuspannen

./.

sind, sondern bei der auch ein Werkzeugwechsel selbsttätig vorgenommen werden kann, ohne daß dazu ein großer
Bauaufwand notwendig ist und ohne daß der Werkzeugträger zur Abstützung der Spannkraft und der diesen
entgegengerichteten Kraft beim Lösen der Einspannung
einer Wechselkassette dabei belastet wird. Der Zuganker soll vielmehr im verspannten Zustand fest mit
dem in den Werkzeugträger eingesetzten Werkzeughalter
verbunden sein, so daß ein selbsttätiges Lösen der
Wechselkassette ausgeschlossen  ist.

Gemäß der Erfindung wird dies dadurch erreicht, daß
der Zuganker mittels zwei oder mehrerer sich an diesem
abstützender radial verstellbarer Klemmkörper in Form
von Kugeln, Rollen oder Prismen, die durch an einem
in den Zuganker eingesetzten und vorzugsweise durch
eine Servoeinrichtung axial verschiebbaren
Spannkolben und/oder an dem Werkzeughalter oder einem
mit diesem fest verbundenen Zwischenstück angearbeiteten
in Achsrichtung geneigten Schrägflächen betätigbar sind,
mit dem Werkzeughalter verspannbar ist und daß in Einspannlage der Wechselkassette der Zuganker über die
durch den Spannkolben arretierten Klemmstücke mit dem
Werkzeughalter oder dem Zwischenstück verriegelt ist.

Zweckmäßig ist es hierbei, die Klemmkörper in vorzugsweise gleichmäßig über den Umfang verteilt in den Zuganker eingearbeiteten Ausnehmungen radial verstellbar
zu führen, wobei deren der Wechselkassette zugekehrte
Flächen als vorzugsweise achssenkrecht verlaufende
Abstützflächen für die Klemmkörper ausgebildet sind,
und   den Spannkolben in einer auf der der Servoeinrichtung zugekehrten Stirnseite offenen Ausnehmung

./.

- 4                    0121665

des Zugankers in diesen einzusetzen und vorzusehen, daß dieser mit dem Betätigungsglied der Servoeinrichtung selbsttätig koppelbar und in einer Endstellung entriegelbar ist.

Zur Arretierung der Klemmkörper sollte ferner der Spannkolben einen Bund, eine vorzugsweise konvex gekrümmte Schrägfläche oder dgl. aufweisen, an dem diese bei verriegeltem Zuganker abgestützt sind, dagegen sollte der Spannkolben zur Entriegelung der Klemmkörper mit einer diese teilweise aufnehmenden ringnutartigen Freisparung versehen sein.

Die an dem Spannkolben angearbeiteten zur radialen Verstellung der Klemmkörper vorgesehene Schrägfläche ist in einfacher Weise durch einen kegelig oder konvex gekrümmt gestalteten Abschnitt zu bilden, der in die diese teilweise aufnehmende Freisparung übergeht. In gleicher Art können die in den Werkzeughalter oder das Zwischenstück eingearbeiteten, die Klemmkörper abstützenden Schrägflächen durch eine Ringnut mit kegelig gestaltetem Übergang gebildet werden.

Angebracht ist es ferner, den Spannkolben und den Zuganker zu dessen axialer Verschiebung bei gelöster Verriegelung der Klemmkörper mit zusammenwirkenden Anschlagflächen auszustatten.

Werden Prismen als Klemmkörper vorgesehen, sollten diese jeweils zwei entgegengesetzt zueinander geneigt verlaufende mit den in den Spannkolben und den Werkzeughalter oder das Zwischenstück eingearbeiteten Schrägflächen zusammenwirkende Gegenflächen aufweisen.

.'/.

Um leicht Anpassungen und exakte Einstellungen vornehmen zu können, ist es des weiteren vorteilhaft, das Zwischenstück als den Zuganker aufnehmende in einer Bohrung des Werkzeughalters vorzugsweise mittels eines Schraubgewindes axial verstellbar eingesetzten Hülse auszubilden und diese zum Ausgleich von unumgänglichen Fertigungstoleranzen im Bereich der Klemmkörper in radialer Richtung elastisch verformbar auszubilden, wobei dazu der Werkzeughalter mit einer ringnutförmigen Freisparung, so daß sich die Hülse radial verformen kann, versehen sein sollte.

Zum Ausgleich von unvermeidbaren Fertigungstoleranzen kann der Zuganker aber auch eine in Achsrichtung elastisch verformbare Zone aufweisen, die durch einen oder mehrere in diesen eingearbeitete vorzugsweise achssenkrecht gerichtete Einschnitte gebildet sein kann.

Zur Umlenkung der auf eine winkelversetzt angeordnete Wechselkassette einwirkenden Spannkraft ist es angebracht, den Zuganker mit einem Ansatzstück zu versehen und mit diesem über zugeordnete Schrägflächen in Spannrichtung zwangläufig zu verbinden.

Die Koppelung des Betätigungsgliedes der Servoeinrichtung mit dem Spannkolben kann in der Weise vorgenommen werden, daß dieser eine stirnseitig offene Freisparung aufweist, in die ein von dem Betätigungsglied in axialer Richtung abstehender Ansatz einführbar ist und wobei in den Spannkolben ein bei dessen Axialverschiebung radial nach innen verstellbarer Rastbolzen eingesetzt ist, der in eine in den Ansatz des Betätigungsgliedes eingearbeitete Bohrung einrastbar ist.

./.

Um den Rastbolzen in Ausgangslage zurückzuführen und damit die Koppelung selbst lösen zu können, ist es angebracht, in der Bohrung des Ansatzes einen in Endlage des Kupplungsgliedes auf diesen einwirkenden radial verstellbaren Stift einzusetzen, der auf seiner Außenfläche kegelförmig ausgebildet und durch eine in den Werkzeughalter oder das Zwischenstück eingearbeitete in Achsrichtung geneigte Anlagefläche verschiebbar ist.

Zur Koppelung des Betätigungsgliedes mit dem Spannkolben ist es aber auch möglich, in diesen in zwei oder mehreren vorzugsweise gleichmäßig über den Umfang verteilt angeordneten Ausnehmungen eingesetzte Kugeln vorzusehen, die in in das Betätigungsglied und den Werkzeughalter bzw. das Zwischenstück eingearbeitete umlaufende, im Querschnitt kreissegmentförmig oder dreieckförmig ausgebildete Freisparungen einführbar sind.

Außerdem ist es zweckmäßig, den Spannkolben mittels des in die in den Werkzeughalter oder das Zwischenstück eingearbeiteten Ausnehmung einführbaren Rastbolzens bzw. der in die Ringnut eingreifenden Kugeln in einer Endlage zu arretieren.

Die Servoeinrichtung ist in einfacher Ausgestaltung aus einem in Richtung des Zugankers verstellbar angeordneten Zylinder und einem in diesen eingesetzten beidseitig von einem Druckmittel beaufschlagbaren Kolben zu bilden, an dem das mit dem Spannkolben zusammenwirkende Betätigungsglied angebracht ist, wobei der Zylinder bei einer Verstellung des Spannkolbens mit einer diesem zugekehrten Stirnfläche an dem Werkzeughalter abgestützt ist.

./. '

Um die Zustellung des Zylinders auf einfache Weise vornehmen zu können, sollte dieser mittels eines an der dem Zuganker abgekehrten Stirnseite angeformten Ansatzstückes verschiebbar in einem ortsfesten Druckmittelzuführungsring gelagert sein und mit diesem zwei an den jeweiligen dem Kolben zugeordneten Druckraum angeschlossene Druckkammern bilden.

Nach einer andersartigen Ausgestaltung können aber auch, um nicht die zur Verstellung des Zugankers erforderliche Kraft von außen mittels der Servoeinrichtung auf diesen übertragen zu müssen, zur Erzeugung der auf die Wechselkassette einwirkenden Spannkraft eine oder mehrere Druckfedern, vorzugsweise ein Tellerfederpaket, vorgesehen werden, die an dem Spannkolben und dem diesen aufnehmenden Zuganker abgestützt sind und deren Druckkraft über die an dem Spannkolben und dem Werkzeughalter angearbeiteten Schrägflächen anliegenden Klemmkörper auf den Zuganker übertragbar ist.

Wird hierbei die an dem Spannkolben angearbeitete Schrägfläche als konvex gekrümmte Kurve, die bis zu $10^{o}$ zur Längsachse geneigt sein kann, ausgebildet, so werden nicht nur die vorhandenen Toleranzen ausgeglichen, sondern die sich degressiv vermindernde Kraft der Druckfedern wird durch den unterschiedliche Verstellweg der als Kugeln ausgebildeten Klemmkörper derart beeinflußt, daß die auf den Zuganker einwirkende Kraft nahezu über den gesamten Verstellbereich konstant ist. Die Wechselkassette wird somit stets, unabhängig von der jeweiligen Lage der Klemmkörper, mit der gleichen Kraft gespannt.

Zweckmäßig ist es hierbei des weiteren, zur Hubbegrenzung der vorgespannten Druckfedern in den Zuganker ein Anschlagring einzusetzen, durch den der Verstellweg des Spannkolbens begrenzt ist.

./.

Die auf den Spannkolben einwirkende Servoeinrichtung kann bei einer derartigen Ausgestaltung in einfacher Weise aus einem in einem Zylinder verschiebbar eingesetzten und von Druckmittel beaufschlagbaren Kolben gebildet werden, durch dessen aus dem Zylinder ragende Kolbenstange der Spannkolben zum Lösen der von den Klemmkörpern bewirkten Verriegelung· entgegen der Kraft der Zugfedern betätigbar ist.

Um das Eindringen von Schmutz zu verhindern, ist es ferner angebracht, die den Zuganker aufnehmende in den Werkzeughalter eingearbeitete Bohrung ein- oder beidseitig durch in den Zuganker und/oder den Werkzeughalter eingesetzte und die den Spannkolben aufnehmende Ausnehmung des Zugankers durch eine oder mehrere in diesen und/oder den Spannkolben eingesetzte·Dichtungen stirnseitig abzudichten.

Der mit einem in die Wechselkassette eingreifende Kopf versehene Ansatz des Zugankers kann an diesen angeschraubt, vorzugsweise auf einen an diesem angeformten Gewindezapfen aufgeschraubt werden.

Die gemäß der Erfindung ausgebildete Vorrichtung zum Einspannen von Wechselkassetten ist nicht nur einfach in der konstruktiven Ausgestaltung und damit auf wirtschaftliche Weise herzustellen, sondern auch leicht zu betätigen und gewährleistet vor allem eine stets zuverlässige Verspannung des in die Wechselkassetten eingreifenden Zugankers. Wird nämlich der Zuganker mittels radial verstellbarer Klemmkörper, die über Schrägflächen durch einen Spannkolben betätigbar sind, in dem Werkzeughalter verspannt und in Einspannlage der Wechselkassette wiederum mit Hilfe der Klemmkörper mit diesem verriegelt, so ist es möglich, einen Werkzugwechsel vollautomatisch in kurzer Zeit vorzunehmen.

./.

Dabei ist von besonderem Vorteil, daß der z. B. als Scheibenrevolver ausgebildete Werkzeugträger einer Werkzeugmaschine weder durch die beim Verspannen des Zugankers noch durch die beim Lösen dieser Verspannung auftretenden Kräfte in einem erheblichen Maße beansprucht wird, diese Kräfte werden vielmehr, da sich die Servoeinrichtung lediglich an dem Werkzeughalter bzw. dem Spannkolben abstützt, in diesem ausgeglichen. Einseitige Belastungen, die sich ungünstig auf die Lagerung des Werkzeugträgers und damit auch auf die anderen Werkzeuge auswirken, treten somit nicht auf, auch ist die zum Spannen des Zugankers und Entriegeln der Klemmkörper aufgrund der vorgesehenen Ausgestaltung erforderliche Kraft äußerst gering, dennoch ist eine stets zuverlässige und betriebssichere Einspannung einer Wechselkassette gewährleistet.

In der Zeichnung sind drei gleichartige Ausführungsbeispiele der gemäß der Erfindung ausgebildeten Vorrichtung zum Einspannen von Wechselkassetten dargestellt und nachfolgend im einzelnen erläutert. Hierbei zeigen, jeweils im Schnitt:

Fig. 1    die Spannvorrichtung mit einer gespannten Wechselkassette,

Fig. 2    die Spannvorrichtung nach Fig. 1 in einer vergrößerten Darstellung,

./.

Fig. 3    die Spannvorrichtung nach Fig. 2
          mit als Prismen ausgebildetem
          Klemmkörper,

Fig. 4    Die Spannvorrichtung nach Fig. 1
          in einer andersartigen Ausgestaltung
          mit durch die Servoeinrichtung
          gelöstem Zuganker,

Fig. 5    die Spannvorrichtung nach Fig. 4
          mit einer mittels des verriegelten
          Zugankers eingespannten Wechselkassette,

Fig. 6    die Spannvorrichtung nach Fig. 4
          mit einer eingespannten abgewinkelt
          zu dem Zuganker angeordneten Wechselkassette

          und

Fig. 7    eine Spannvorrichtung mit auf den
          Spannkolben einwirkenden Druckfedern.

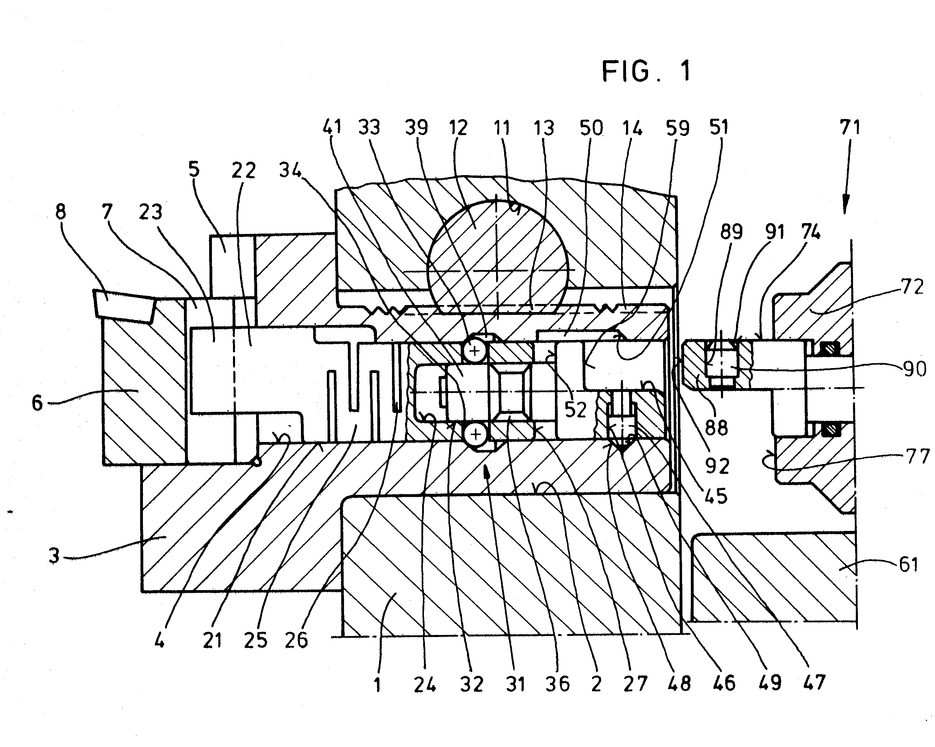

Die in den Fig. 1, 4 bis 6 sowie 7 mit 31 bzw. 31'
bzw. 1o1 bezeichnete Vorrichtung dient zum Einspannen
von Wechselkassetten 6 bzw. 6'', die mit unterschiedlich ausgebildeten Werkzeugen 8 bzw. 8'' bestückt sein
können, in einem einer Werkzeugmaschine zugeordneten
Werkzeugträger 1. Dazu ist der um eine Achse drehbar

                                        √/.

und in unterschiedlichen Winkelstellungen fixierbare Werkzeugträger 1 mit einer Vielzahl von achsparallelen Ausnehmungen 2 versehen, in die Werkzeughalter 3 bzw. 3'', die in Nuten 5 bzw. 5'' die Wechselkassetten 6 bzw. 6'' aufnehmen, eingesetzt sind. Zur Befestigung der Werkzeughalter 3 bzw. 3'' ist jeweils ein in einer in den Werkzeugträger 1 eingearbeiteten Bohrung 11 eingesetzter Querkeil 12 vorgesehen, der mit einer Verzahnung 13 in eine an dem Werkzeughalter 3 bzw. 3'' angebrachten Gegenverzahnung 14 eingreift. Mittels eines eingeschraubten Deckels 15, in dem eine auf den Querkeil 12 einwirkende Schraube 16 gehalten ist, ist die Bohrung 11 verschlossen.

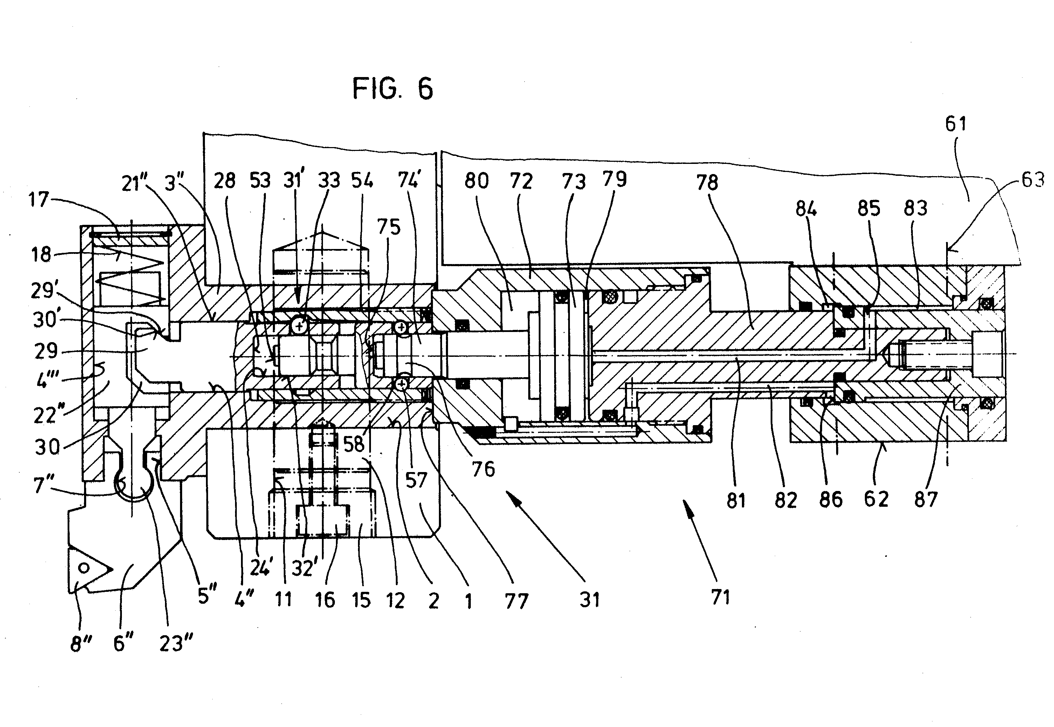

Zur Verspannung der Wechselkassetten 6 bzw. 6'' ist ein in einer Bohrung 4, 4', 4'', 4''' des Werkzeughalters 3, 3'' in Achsrichtung verstellbar angeordneter Zuganker 21 bzw. 21' bzw. 21'' bzw. 21''' vorgesehen, der bei den Ausgestaltungen nach den Fig. 1, 4 und 5 sowie 7 unmittelbar mittels eines an einem angeformten oder angeschraubten Ansatzes 22 bzw. 22' bzw. 22''' angeformten Kopfes 23 bzw. 23' bzw. 23''', bei der Ausgestaltung nach Fig. 6 dagegen über ein achssenkrecht angeordnetes Ansatzstück 22'', in eine in die Wechselkassette 6 bzw. 6'' eingearbeitete Aufnahmenut 7 bzw. 7'' eingreift. Die Verstellbewegungen des Zugankers 21'' werden bei der Ausgestaltung nach Fig. 6 mittels zusammenwirkender, an einer Nase 29 des Zugankers 21'' und einer in das Ansatzstück 22'', das in einer achssenkrecht verlaufenden Bohrung 4''' des Werkzeughalters 3''' verschiebbar eingesetzt ist, eingearbeiteten Aussparung 30 angebrachter Keilflächen 29' und 30' umgelenkt.

./.

Zur Rückstellung des mittels des Kopfes 23'' in die Aufnahmenut 7'' eingreifenden Ansatzstückes 22'' ist eine Feder 18 vorgesehen, die sich an einem in die Bohrung 4''' eingesetzten Abschlußdeckel 17 abstützt.

Die Wechselkassetten 6 bzw. 6'' sind bei den Ausgestaltungen nach den Fig. 1 und 4 bis 6 mittels der jeweils in der in den Werkzeughalter 3 bzw. 3'' eingearbeiteten Bohrung 4, 4', 4'' axial verschiebbar angeordneten Zuganker 21, 21', 21'' verspannbar. Dazu dient die Spannvorrichtung 31, 31', die aus einem in einer Bohrung 24 bzw. 24' des Zugankers 21, 21', 21'' verschiebbar eingesetzten Spannkolben 32 bzw. 32' und in Ausnehmungen des Zugankers 21, 21', 21'' radial verstellbar angeordneten Klemmkörpern 33 bzw. 42 besteht. Zur Verstellung des Spannkolbens 32, 32' ist eine Servoeinrichtung 71 vorgesehen, die zustellbar in einem an einer Halterung 61 mittels Schrauben 63 befestigten, mit Druckmittelanschlüssen 64 und 65 ausgestatteten Druckmittelzuführungsring 62 angeordnet ist.

Die Servoeinrichtung 71 besteht aus einem axial zustellbaren Zylinder 72 und einem in diesen eingesetzten, beidseitig von Druckmittel beaufschlagbaren Kolben 73, dessen Kolbenstange als mit dem Spannkolben 32, 32' koppelbares Betätigungsglied 74 bzw. 74' ausgebildet ist. Der Zylinder 72 weist hierbei einen in diesen eingeschraubten Ansatz 78 auf, der verschiebbar in dem Druckmittelzuführungsring 62 gelagert ist. Den Druckräumen 79 und 80 wird Druckmittel von den Anschlüssen 64 und 65 über in den Ansatz 78 eingearbeitete Druckmittelkanäle 81 bzw. 82 zugeleitet, die über Druckkammern 83 bzw. 84 mit den Anschlüssen 64 bzw. 65 verbunden sind. Die Druckkammern 83

.7.

und 84 sind durch ein mit dem Ansatz 78 verschraubtes Endstück 87 gebildet und weisen Druckflächen 85 und 86 auf, bei deren Beaufschlagung der Zylinder 72 axial verstellbar ist.

Zur formschlüssigen Verbindung des Spannkolbens 32 mit dem Betätigungsglied 74 der Servoeinrichtung 71 ist bei dem Ausführungsbeispiel nach Fig. 1 ein in einer radial gerichteten Bohrung 46 verstellbar eingesetzter Rastbolzen 47 vorgesehen, der in eine in das Betätigungsglied 74 eingearbeitete Bohrung 89 einführbar ist. Damit das Betätigungsglied 74 dazu in den Spannkolben 32 eingreifen kann, weist dieser stirnseitig eine halbkreisförmige Freisparung 45 auf und das Betätigungsglied 74 ist mit einem entsprechend ausgebildeten Ansatzstück 88 versehen, so daß diese Teile ineinandergesteckt und mittels des Bolzens 47, der bei einer Verschiebung des Spannkolbens 32 zwangläufig in die Bohrung 89 einführbar ist, miteinander verbunden werden können.

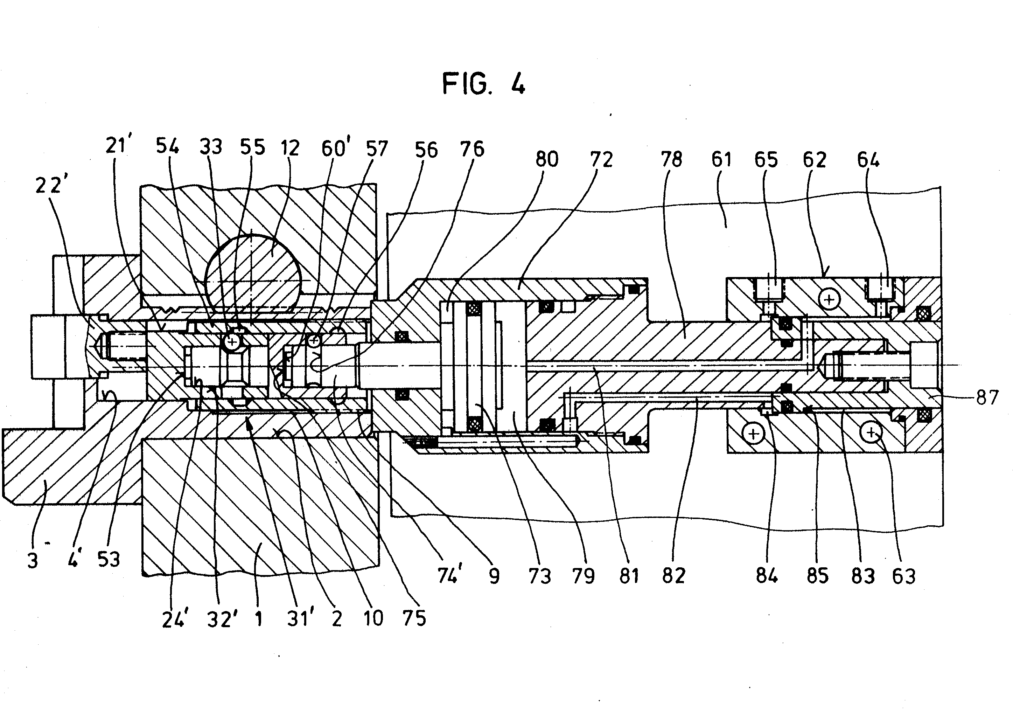

Die Koppelung des Betätigungsgliedes 74' mit dem Spannkolben 32' erfolgt bei den Ausführungsvarianten nach den Fig. 4 bis 6 mittels in Ausnehmungen 58 des Spannkolbens 32' radial verstellbar eingesetzter Kugeln 57, die in eine in das Betätigungsglied 74' eingearbeitete Ringnut 76 mit kreissegmentartigem Querschnitt einrastbar sind. Außerdem sind die Kugeln 57 durch das Betätigungsglied 74' auch teilweise in eine ringnutförmige Ausnehmung 56 einführbar, so daß der Spannkolben 32' in einer Endlage verrastbar ist.

Bei der in den Fig. 1, 2 und 3 gezeigten Stellung des Spannkolbens 32 ist der Zuganker 21 mit dem Werkzeughalter 3 verspannt und in dieser Lagezuordnung fixiert, so daß die Wechselkassette 6 fest in dem Werkzeughalter 3 gehalten ist. Die als Kugeln 33 oder Prismen 42 ausgebildeten, in den in den Zuganker 21 eingearbeiteten gleichmäßig über den Umfang angeordneten Ausnehmungen 34 eingesetzten Klemmkörper stützen sich dabei an einer an dem Werkzeughalter 3 vorgesehenen Schrägfläche 4o und einer Anlagefläche 35 des Zugankers 21 ab und werden in dieser Position durch einen an dem Spannkolben 32 angebrachten Bund 41 arretiert.

Um die Klemmkörper 33 bzw. 42 in diese Lage zu bringen, war bei gelöstem Zuganker 21 - die Klemmkörper 32 bzw. 42 greifen in diesem Betriebszustand teilweise in die in den Spannkolben 32 eingearbeitete Ringnut 36 ein - der in der Bohrung 24 eingesetzte Spannkolben 32 mit Hilfe der Servoeinrichtung 71 nach rechts zu verschieben. Durch die an dem Spannkolben 32 angeformte Schrägfläche 37 werden dabei die Klemmmkörper 33 bzw. 42 nach außen gegen eine durch eine Ringnut 39 geschaffene Schrägfläche 4o des Werkzeughalters 3 gedrückt. Die Klemmkörper 33 bzw. 42 führen dabei aber nicht nur eine Radialbewegung aus, sondern diese werden aufgrund der Neigung der Schrägflächen 37 und 4o auch axial verschoben. Und da sich die Klemmkörper 33 bzw. 42 dabei an der Anlagefläche 35 des Zugankers 21 abstützen, wird dieser ebenfalls in axialer Richtung verschoben und gespannt. Sobald der Spannkolben 32 die in den Fig. 1 bis 3 dargestellte Lage einnimmt und die Klemmkörper 33 bzw. 42 sich somit an dem Bund 41 abstützen, ist deren Verstellbewegung beendet und der Zuganker 21 ist mit dem Werkzeugträger 3 verriegelt.

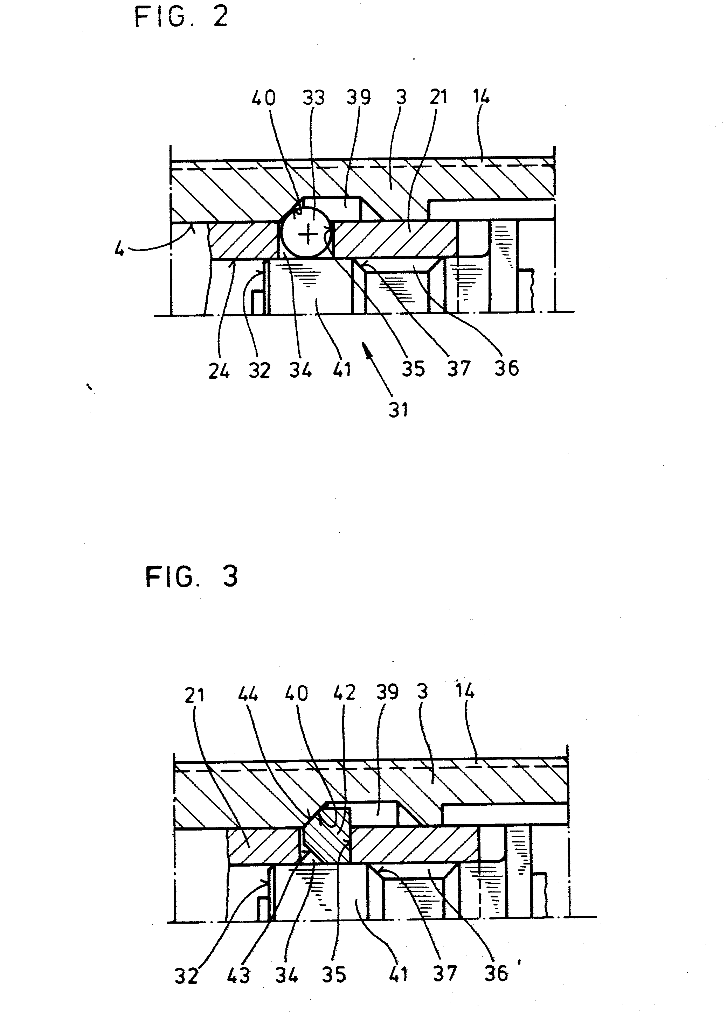

Die in Fig. 3 dargestellten als Prismen 42 ausgebildeten Klemmkörper weisen, um eine Axialbewegung ausführen zu können, mit den Schrägflächen 37 und 4o zusammenwirkende Keilflächen 43 bzw. 44 auf. Anstelle der
Kugeln 33 bzw. der Prismen 42 können auch z. B. ballig
ausgebildete Rollen als Klemmkörper vorgesehen werden.

Um unumgängliche Fertigungstoleranzen auf einfache
Weise ausgleichen zu können, ist der Zuganker 21 mit
einer elastisch verformbaren Zone 25 versehen, die durch
mehrere achssenkrecht gerichtete Einschnitte 26 gebildet
ist.

Bei den Ausgestaltungen nach den Fig. 4 bis 6 ist der
Zuganker 21', 21'' in einem in dem Werkzeughalter 3,
3'' angeordneten, als Hülse ausgebildeten Zwischenstück 54 verschiebbar eingesetzt, das mit einer ringnutförmigen Ausnehmung 55 zur Aufnahme der Klemmkörper
33 versehen ist. Das Zwischenstück 54 ist hierbei in
das in die Bohrung 4', 4'' eingearbeitete Gewinde 9
eingeschraubt, so daß auf einfache Weise Lagekorrekturen und somit Anpassungen vorgenommen werden können.

Außerdem ist das Zwischenstück 54 im Bereich der Klemmkörper 33 zum Ausgleich von Fertigungstoleranzen radial
verformbar. Um dies zu ermöglichen, weist der Werkzeughalter 3, 3'' eine Freisparung 1o auf, so daß sich, wie
dies in Fig. 6 dargestellt ist, das Zwischenstück 54
leicht verformen kann.

Gemäß der Darstellungen in den Fig. 1, 5 und 6 ist die
Wechselkassette 6, 6'' mittels des Zugankers 21, 21' bzw.
21'' fest in dem Werkzeughalter 3 bzw. 3'' eingespannt
und über die Klemmkörper 33 mit diesem in Spannstellung
verriegelt. Die in den Ausnehmungen 34 des Spannkolbens
32 bzw. 32' gehaltenen Klemmkörper 33 greifen hierbei im verspannten Zustand des Zugankers 21, 21' bzw. 21'' teilweise in die Ausnehmungen 39 des Werkzeughalters 3 bzw. die Ausnehmungen 55 des Zwischenstückes 54 ein, so daß die Wechselkassette 6 bzw. 6'' über diese Verbindung mit dem Werkzeughalter 3 bzw. 3'' fest verspannt ist.

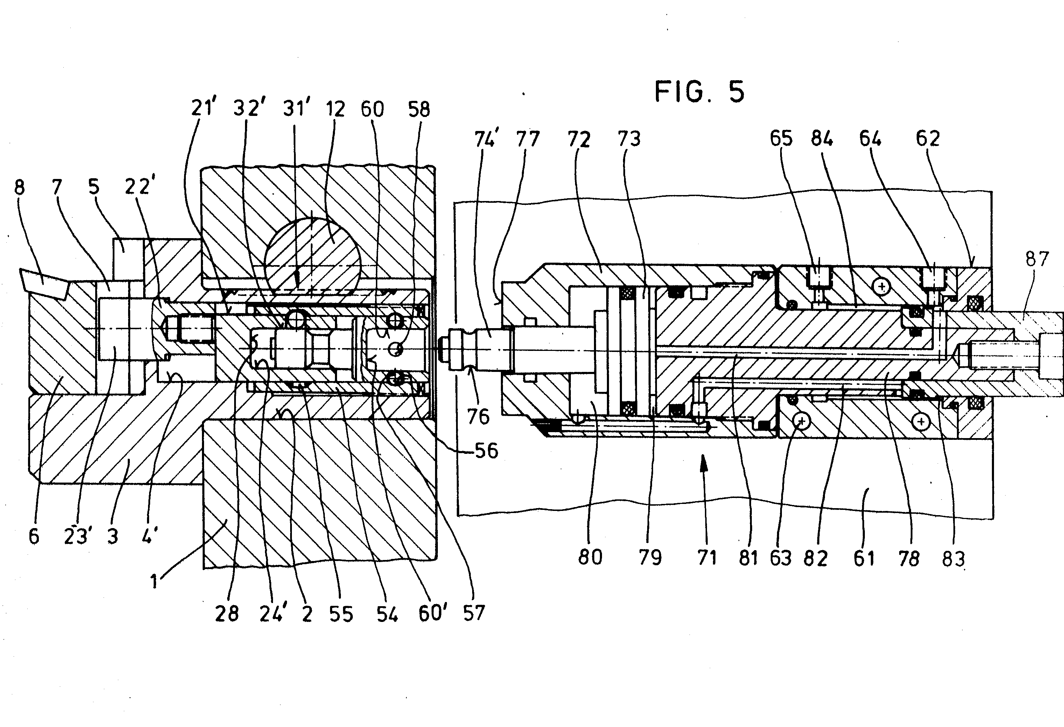

Um die Verriegelung zu lösen, ist, ausgehend von dem in Fig. 5 dargestellten Betriebszustand, dem Druckraum 79 der Servoeinrichtung 71 über den Druckmittelanschluß 64 des Druckmittelzuführungsringes 62 Druckmittel zuzuführen. Da der dem Druckraum 79 zugeordnete Druckmittelzuführungskanal 81 über die zwischen dem Druckmittelzuführungsring 62 und dem Ansatz 78 vorgesehene Druckkammer 83 erfolgt, baut sich in dieser ebenfalls ein geringer Druck auf, so daß nicht nur der Kolben 73, sondern gleichzeitig auch der Zylinder 72 der Servoeinrichtung 71 bis zur Anlage der Stirnfläche 77 an dem Werkzeughalter 3 bzw. 3'' nach links ausgefahren wird. Sobald sich die Servoeinrichtung 71 an dem Werkzeughalter 3 bzw. 3'' abstützt, wird der Druck in dem Druckraum 79 entsprechend dem Druck des zugeführten Druckmitteldruckes erhöht und das Betätigungsglied 74 bzw. 74' wird in die Freisparung 45 bzw. die Bohrung 60 des Spannkolbens 32 bzw. 32' eingeführt. Über die sich an der Anlagefläche 59 bzw. 60' des Spannkolbens 32,32' abstützende Stirnfläche 92 bzw. 75 des Betätigungsgliedes 74 bzw. 74' wird sodann die von dem Kolben 73 ausgeübte Kraft auf den Spannkolben 32 bzw. 32' übertragen und dieser wird ebenfalls nach links verschoben.

Sobald die in den Spannkolben 32, 32' eingearbeitete ringnutartige Freisparung 36 eine Lage einnimmt, in der die Klemmkörper 33, 42 in diese eingreifen können, ist die Verriegelung gelöst und der Zuganker 21, 21' bzw. 21'' entspannt. Durch die Schrägflächen 40 der Ringnut 39

./.

bzw. 55 werden nämlich die unter Spannung gehaltenen Klemmkörper 32, 43 nach innen abgewiesen, der Zuganker 21, 21' bzw. 21'' kann entsprechend dem vorgegebenen Verstellweg des Kolbens 73, da sich die Stirnfläche 52 bzw. 53 des Spannkolbens 32, 32' an einer Gegenfläche 27 bzw. 28 des Zugankers 21, 21', 21'' anlegt, verschoben werden und die Werkzeugkassette 6 bzw. 6'' ist leicht auszuwechseln.

Ist dieser selbsttätig ablaufende Vorgang beendet, wird über den Druckmittelanschluß 65 des Druckmittelzuführungsringes 62 dem Druckraum 8o des Zylinders 72 Druckmittel zugeführt. Der Kolben 73 wird dadurch, da sich der Zylinder 72 über die Stirnflächen 77 weiterhin an dem Werkzeughalter 3 bzw. 3'' abstützt, nach rechts verschoben und der mit dem Betätigungsglied 74 bzw. 74' fest verbundene Spannkolben 32 bzw. 32' wird mitgenommen. Beim Einführen des Betätigungsgliedes 74' sind nämlich die Kugeln 57 in der Ringnut 56 eingerastet bzw. der Rastbolzen 47 wurde durch die angeformte Kegelfläche 48, die mit einer in den Werkzeughalter 3 eingearbeiteten kegelig ausgebildeten Ausnehmung 49 zusammenwirkt, in die Bohrung 89 zwangläufig eingeführt. Durch diese Zustellbewegung des Spannkolbens 32 bzw. 32' werden die Klemmkörper 33 in der bereits beschriebenen Weise nach außen und axial verschoben, so daß der Zuganker 21, 21', 21'' in Einspannlage der Wechselkassette 6, 6'' wiederum verriegelt ist.

Sobald der Spannkolben 32 bzw. 32' eine Lage einnimmt, in der die Kugeln 57 bzw. der Rastbolzen 49 in die Ringnut 56 bzw. die Ausnehmung 49 einführbar sind, wird die Verbindung zwischen diesem und dem Betätigungsglied 74 bzw. 74' selbsttätig gelöst. Die Kugeln 57 werden nämlich durch die kreissegmentförmig gestaltete Ringnut 76 nach außen gedrückt bzw. der Rastbolzen 49 wird durch einen in der Bohrung 89 verschiebbar angeordneten Stift 9o, der mit einer angeformten Kegelfläche 91 sich an einer Anlagefläche 51 der diesen bei der Verstellbewegung nach links aufnehmenden Aussparung 5o anlegt und radial nach innen geschoben wird, nach außen in die Ausnehmung 49 gedrückt, so daß der Spannkolben 32 bzw. 32' in der Endlage auf diese Weise sicher arrtiert ist.

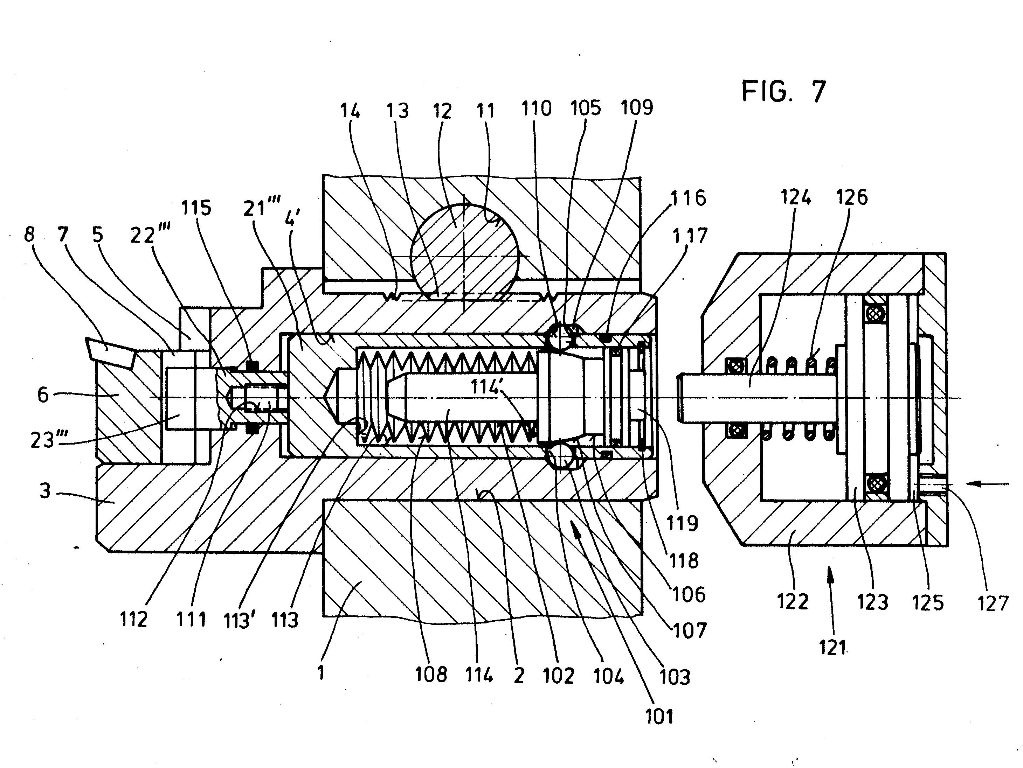

Bei der in Fig. 7 dargestellten Vorrichtung 1o1 wird die auf die Wechselkassette 6 einwirkende Spannkraft durch Druckfedern 1o8 erzeugt, die als Tellerfederpakete ausgebildet sind und sich an der Stirnfläche 113' einer in den Zuganker 21''' eingearbeiteten Bohrung 113, die den Spannkolben 1o2 aufnimmt, sowie einer an diesen angebrachten Stirnfläche 114' abstützen. Mittels eines an dem Spannkolben 1o2 vorgesehenen Zapfens 114 sind die Druckfedern 1o8 geführt.

Als Klemmkörper dienen bei diesem Ausführungsbeispiel Kugeln 1o3, die jeweils in einer in den Zuganker 21''' eingearbeiteten Ausnehmung 1o4 gehalten sind und sich an der Fläche 1o5 abstützen. Der Spannkolben 1o2 ist wiederum mit einer die Kugeln 1o3 teilweise aufnehmenden Ringnut 1o6 und einer sich an diese anschließenden Schrägfläche 1o7 versehen, die konvex gekrümmt ausgebildet ist. Auch der Werkzeughalter 3 weist eine Ringnut 1o9 sowie eine geneigt verlaufende Schrägfläche 11o auf, an der die Kugeln 1o3 in Einspannlage der Wechselkassette 6 anliegen.

Die Servoeinrichtung 121 besteht aus einem Zylinder 122 und einem in diesen eingesetzten Kolben 123, dessen

./.

Kolbenstange 124 aus dem Zylinder 122 herausragt und einem an dem Spannkolben 1o2 angeformten Zapfen 119 zusammenwirkt. Wird dem Druckraum 125 der Servoeinrichtung 121 über den Anschluß 127 Druckmittel zugeführt, so wird der Kolben 123 entgegen der Kraft einer Rückstellfeder 126 nach links verschoben und die Kolbenstange 124 legt sich an dem Zapfen 119 an. Wird der Druck weiter erhöht, so wird der Spannkolben 1o2 entgegen der Kraft der vorgespannten Druckfeder 1o8 in die Ausnehmung 113 des Zugankers 21''' hineingedrückt. Die Kugeln 1o3 können dadurch in die Ringnut 1o6 gelangen, so daß die dargestellte Verriegelung zwischen dem Zuganker 21''' und dem Werkzeughalter 3 gelöst ist. Die Wechselkassette 6 kann in diesem Betriebszustand ohne weiteres entfernt und eine andere Kassette kann auf den Kopf 23''' aufgesetzt werden.

Wird über die Servoeinrichtung 121 keine Kraft mehr auf den Spannkolben 1o2 ausgeübt, so wird dieser durch die Kraft der vorgespannten Druckfedern 1o8 wiederum nach rechts in die dargestellte Lage zurückgeschoben. Die Kugeln 1o3 werden dabei durch die konvex gekrümmte Schrägfläche 1o7 nach außen gegen die Schrägfläche 11o und durch diese in Achsrichtung gedrückt, so daß, da die Kugeln 1o3 sich an der Fläche 1o5 des Zugankers 21''' anlegen, dieser in Achsrichtung mitgenommen und somit eine auf den Kopf 23''' aufgesetzte Wechselkassette fest in den Werkzeughalter 3 eingespannt ist. Die auf diese einwirkende Spannkraft wird somit durch die vorgespannten Druckfedern 1o8 erzeugt und über die Schrägflächen 1o7 und 11o auf den Zuganker 21''' übertragen. Durch die Gestaltung der konvex gekrümmten Schrägfläche 1o7 kann dabei die sich degressiv abbauende Kraft der Druckfedern 1o8 derart

.'/.

beeinflußt werden, daß in jeder Spannstellung - durch unterschiedliche Toleranzen kann z. B. die Einspannlage der Wechselkassette 6 bereits auf halber Länge der Schrägfläche 1o7 erreicht sein - eine nahezu konstante Kraft auf den Zuganker 21''' übertragen wird.

Um das Eindringen von Schmutz in die Vorrichtung 1o1 auszuschließen, ist die in den Werkzeughalter 3 eingearbeitete Bohrung 4' sowie die in dem Zuganker 21''' vorgesehene Bohrung 113 durch Dichtungen 115 und 116 bzw. 117 stirnseitig abgedichtet. Außerdem ist in den Zuganker 21''', dessen mit einem Kopf 23''' zur Halterung der Wechselkassette 6 versehenes Ansatzstück 22'' eine Gewindebohrung 112 aufweist, in die ein an dem Zuganker 21''' angearbeiteter Zapfen 111 eingeschraubt ist, ein Anschlagring 118 vorgesehen, durch den der Verstellweg des Spannkolbens 1o2, sofern dessen Kopf 23''' nicht in einer Wechselkassette gehalten ist, begrenzt ist.

8. Juni 1983   e-1
A 7800

**DIPL.-ING. GUIDO ENGELHARDT PATENTANWALT**

7990 Friedrichshafen

SMW Schneider & Weißhaupt
GmbH

7996 Meckenbeuren

P a t e n t a n s p r ü c h e :

1. Vorrichtung zum Einspannen von mit Bearbeitungswerkzeugen bestückten Wechselkassetten in einem Werkzeugträger einer Werkzeugmaschine mit in diesen eingesetzten Werkzeughaltern, mit denen die Wechselkassetten jeweils über einen in Achsrichtung verstellbar angeordneten Zuganker einspannbar sind,

d a d u r c h   g e k e n n z e i c h n e t ,

daß der Zuganker (21; 21'; 21''; 21''') mittels zwei
oder mehrerer sich an diesem abstützender radial verstellbarer Klemmkörper (33; 42; 1o3) in Form von Kugeln,
Rollen oder Prismen, die durch an einem in den Zuganker (21; 21'; 21''; 21''') eingesetzten und vorzugsweise durch eine Servoeinrichtung (71; 121) axial verschiebbaren Spannkolben (32; 32'; 1o2) und/oder an dem
Werkzeughalter (3) oder einem mit diesem fest verbundenen Zwischenstück (54) angearbeiteten in Achsrichtung

./.

geneigten Schrägflächen (37; 4o; 1o7; 11o) betätigbar sind, mit dem Werkzeughalter (3; 3'') verspannbar ist und daß in Einspannlage der Wechselkassette (6; 6'') der Zuganker (21; 21'; 21''; 21''') über die durch den Spannkolben (32; 32'; 1o2) arretierten Klemmstücke (33; 42; 1o2) mit dem Werkzeughalter (3) oder dem Zwischenstück (54) verriegelt ist.

2. Vorrichtung nach Anspruch 1,

   d a d u r c h   g e k e n n z e i c h n e t ,

   daß die Klemmkörper (33; 42; 1o2) in vorzugsweise gleichmäßig über den Umfang verteilt in den Zuganker (21; 21''') eingearbeiteten Ausnehmungen (34; 1o4) radial verstellbar geführt sind, deren der Wechselkassette (6) zugekehrten Flächen (35; 135) als vorzugsweise achssenkrecht verlaufende Abstützflächen für die Klemmkörper (33; 42; 1o2) ausgebildet sind.

3. Vorrichtung nach Anspruch 1 oder 2,

   d a d u r . c h   g e k e n n z e i c h n e t ,

   daß der Spannkolben (32; 32'; 1o2) in einer auf der der Servoeinrichtung (71; 121) zugekehrten Stirnseite offenen Ausnehmung (24; 24'; 113) des Zugankers (21; 21'; 21''; 21''') in diesen eingesetzt und mit dem Betätigungsglied (74, 74'; 124) der Servoeinrichtung (71; 121) selbsttätig koppelbar und in einer Endstellung entriegelt ist.

./.

4. Vorrichtung nach einem oder mehreren der Ansprüche 1 bis 3,

d a d u r c h   g e k e n n z e i c h n e t ,

daß der Spannkolben (32; 1o2) zur Arretierung der Klemmkörper (33; 42; 1o3) einen Bund (41), eine vorzugsweise konvex gekrümmte Schrägfläche (1o7) oder dgl. aufweist, an dem diese bei verriegeltem Zuganker (21; 21''') abgestützt sind.

5. Vorrichtung nach einem oder mehreren der Ansprüche 1 bis 4,

d a d u r c h   g e k e n n z e i c h n e t ,

daß der Spannkolben (32; 1o2) zur Entriegelung der Klemmkörper (33; 42; 1o2) mit einer diese teilweise aufnehmenden ringnutartigen Freisparung (36; 1o6) versehen ist.

6. Vorrichtung nach einem oder mehreren der Ansprüche 1 bis 5,

d a d u r c h   g e k e n n z e i c h n e t ,

daß die an dem Spannkolben (32; 1o2) angearbeiteten zur radialen Verstellung der Klemmkörper (33; 42; 1o3) vorgesehene Schrägfläche (37; 1o7) durch einen kegelig gestalteten oder konvex gekrümmten Abschnitt gebildet ist, der in die diese teilweise aufnehmende Freisparung (36; 1o6) übergeht.

./.

7. Vorrichtung nach einem oder mehreren der Ansprüche 1 bis 6,

d a d u r c h   g e k e n n z e i c h n e t ,

daß die in den Werkzeughalter (3) oder das Zwischenstück (54) eingearbeitete, die Klemmkörper (33; 42) abstützende Schrägfläche (4o) durch eine Ringnut (39) mit kegelig gestaltetem Übergang gebildet ist.

8. Vorrichtung nach einem oder mehreren der Ansprüche 1 bis 7,

d a d u r c h   g e k e n n z e i c h n e t ,

daß der Spannkolben (32; 32') und der Zuganker (21; 21'; 21'') zu dessen axialer Verschiebung bei gelöster Verriegelung der Klemmkörper (33; 42) zusammenwirkende Anschlagflächen (27; 52 bzw. 28; 53) aufweisen.

9. Vorrichtung nach einem oder mehreren der Ansprüche 1 bis 8,

d a d u r c h   g e k e n n z e i c h n e t ,

daß die Prismen (42) jeweils zwei entgegengesetzt zueinander geneigt verlaufende mit den in den Spannkolben (32) und den Werkzeughalter (3) oder das Zwischenstück (54) eingearbeiteten Schrägflächen (37 bzw. 4o) zusammenwirkende Gegenflächen (43, 44) versehen sind.

1o. Vorrichtung nach einem oder mehreren der Ansprüche 1 bis 9,

./.

0121665

dadurch gekennzeichnet,

daß das Zwischenstück (54) als den Zuganker (21', 21'') aufnehmende in einer Bohrung (4',4'') des Werkzeughalters (3, 3") vorzugsweise mittels eines Schraubgewindes (9) axial verstellbar eingesetzten Hülse ausgebildet ist.

11. Vorrichtung nach Anspruch 1o,

dadurch gekennzeichnet,

daß zum Ausgleich von Toleranzen die Hülse (Zwischenstück 54) im Bereich der Klemmkörper (33; 42) in radialer Richtung elastisch verformbar ausgebildet ist.

12. Vorrichtung nach Anspruch 11,

dadurch gekennzeichnet,

daß der Werkzeughalter (3) im Bereich der Klemmkörper (33; 42) mit einer ringnutförmig ausgebildeten Freisparung (55) versehen ist.

13. Vorrichtung nach einem oder mehreren der Ansprüche 1 bis 9,

dadurch gekennzeichnet,

daß zum Ausgleich von Toleranzen der Zuganker (21) eine in Achsrichtung elastisch verformbare Zone (25) aufweist.

./.

- 6 -

0121665

14. Vorrichtung nach Anspruch 13,

d a d u r c h   g e k e n n z e i c h n e t ,

daß die elastisch verformbare Zone (25) des Zugankers (21) durch einen oder mehrere in diesen
eingearbeitete vorzugsweise achssenkrecht gerichtete
Einschnitte (26) gebildet ist.

15. Vorrichtung nach einem oder mehreren der
Ansprüche 1 bis 14,

d a d u r c h   g e k e n n z e i c h n e t ,

daß zur Umlenkung der auf eine winkelversetzt angeordnete Wechselkassette (6") einwirkenden Spannkraft
der Zuganker (21'') mit einem Ansatzstück (22'')
versehen und mit diesem über zugeordnete Schrägflächen (29, 3o) in Spannrichtung zwangläufig
verbunden ist.

16. Vorrichtung nach einem oder mehreren der
Ansprüche 1 bis 15,

d a d u r c h   g e k e n n z e i c h n e t ,

daß zur Koppelung des Betätigungsgliedes (74) der
Servoeinrichtung (71) mit dem Spannkolben (32)
dieser eine stirnseitig offene Freisparung (45)
aufweist, in die ein von dem Betätigungsglied (74)
in axialer Richtung abstehender Ansatz (88) einführbar ist, und daß in den Spannkolben (32) ein
bei dessen Axialverschiebung radial nach innen

./.

verstellbarer Rastbolzen (47) eingesetzt ist, der
in eine in den Ansatz (88) des Betätigungsgliedes
(74) eingearbeitete Bohrung (89) einrastbar ist.

17. Vorrichtung nach Anspruch 16,

   d a d u r c h   g e k e n n z e i c h n e t ,

daß zur Rückführung des Rastbolzens (47) in der
Bohrung (89) des Ansatzes (88) ein in Endlage des
Spannkolbens (32) auf diesen einwirkender radial
verstellbarer Stift (9o) eingesetzt ist, der auf
seiner Außenfläche kegelförmig ausgebildet und
durch eine in den Werkzeughalter (3) oder das
Zwischenstück (54) eingearbeitete in Achsrichtung
geneigte Anlagefläche (51) verschiebbar ist.

18. Vorrichtung nach einem oder mehreren der
   Ansprüche 1 bis 15,

   d a d u r c h   g e k e n n z e i c h n e t ,

daß zur Koppelung des Betätigungsgliedes (74') der
Servoeinrichtung (71) mit dem Spannkolben (32') in
diesen in zwei oder mehreren vorzugsweise gleichmäßig über den Umfang verteilt angeordneten Ausnehmungen (58) eingesetzte Kugeln (57) vorgesehen
sind, die in eine in den Werkzeughalter (3) bzw.
das Zwischenstück (54) eingearbeitete umlaufende,
im Querschnitt kreissegmentförmig oder dreieckförmig
ausgebildete Freisparung (56) einführbar sind.

./.

0121665

19. Vorrichtung nach einem oder mehreren der
Ansprüche 1 bis 18,

dadurch gekennzeichnet,

daß der Spannkolben (32, 32') mittels des in die
in den Werkzeughalter (3) oder das Zwischenstück
(54) eingearbeiteten Ausnehmung (49) einführbaren
Rastbolzens (47) bzw. der in die Ringnut (56)
eingreifenden Kugeln (57) in einer Endlage
arretierbar ist.

2o. Vorrichtung nach einem oder mehreren der
Ansprüche 1 bis 19,

dadurch gekennzeichnet, daß die Servoeinrichtung (71) aus einem in
Richtung des Zugankers (21, 21', 21'') verstellbar
angeordneten Zylinder (72) und einem in diesen
eingesetzten, beidseitig von einem Druckmittel
beaufschlagbaren Kolben (73) gebildet ist, an dem
das mit dem Spannkolben (32, 32') zusammenwirkende
Betätigungsglied (74, 74') angebracht ist.

21. Vorrichtung nach Anspruch 2o,

dadurch gekennzeichnet,

daß der Zylinder (72) bei einer Verstellung des
Spannkolbens (32) mit seiner Stirnfläche (75) an
dem Werkzeughalter (3) abgestützt ist.

./.

- 9 -

0121665

22. Vorrichtung nach Anspruch 2o oder 21,

d a d u r c h   g e k e n n z e i c h n e t ,

daß zur Zustellung des Zylinders (72) dieser mittels eines an der dem Zuganker (21, 21', 21'') abgekehrten Stirnseite angeformten Ansatzstückes (78) verschiebbar in einem ortsfesten Druckmittelzuführungsring (62) gelagert ist und mit diesem zwei an den jeweiligen dem Kolben (73) zugeordneten Druckraum (79, 8o) angeschlossene Druckkammern (83, 84) bildet.

23. Vorrichtung nach einem oder mehreren der Ansprüche 1 bis 6,

d a d u r c h   g e k e n n z e i c h n e t ,

daß zur Erzeugung der auf die Wechselkassette (6) einwirkenden Spannkraft eine oder mehrere vorgespannte Druckfedern (1o8), vorzugsweise ein Tellerfederpaket, vorgesehen sind, die an dem Spannkolben (1o2) und dem diesen aufnehmenden Zuganker (21''') abgestützt sind und deren Druckkraft über die an dem Spannkolben (1o2) und dem Werkzeughalter (3) angearbeiteten Schrägflächen (1o7; 11o) anliegenden Klemmkörper (1o3) auf den Zuganker (21''') übertragbar ist.

24. Vorrichtung nach Anspruch 23,

d a d u r c h   g e k e n n z e i c h n e t ,

./.

daß zur Hubbegrenzung der vorgespannten Druckfedern (1o8) in den Zuganker (21''') ein Anschlagring (118) eingesetzt ist, durch den der Verstellweg des Spannkolbens (1o2) begrenzt ist.

25. Vorrichtung nach Anspruch 23 oder 24,

d a d u r c h   g e k e n n z e i c h n e t ,

daß die auf den Spannkolben (1o2) einwirkende
Servoeinrichtung (121) aus einem in einem Zylinder
(122) verschiebbar eingesetzten und von Druckmittel
beaufschlagbaren Kolben (123) besteht, durch dessen
aus dem Zylinder (122) ragende Kolbenstange (124)
der Spannkolben (1ó2) zum Lösen der von den Klemmkörpern (1o3) bewirkten Verriegelung entgegen der
Kraft der Zugfedern (1o8) betätigbar ist.

26. Vorrichtung nach einem oder mehreren der
Ansprüche 1 bis 25,

d a d u r c h   g e k e n n z e i c h n e t ,

daß die den Zuganker (21''') aufnehmende in den
Werkzeughalter (3) eingearbeitete Bohrung (4')
ein- oder beidseitig durch in den Zuganker (21''')
und/oder den Werkzeughalter (3) eingesetzte Dichtungen (115), 116) stirnseitig abgedichtet ist.

27. Vorrichtung nach einem oder mehreren der
Ansprüche 1 bis 26,

d a d u r c h   g e k e n n z e i c h n e t ,

.'/.

0121665

daß die den Spannkolben (1o2) aufnehmende Ausnehmung (113) des Zugankers (21''') durch eine oder mehrere in diesen und/oder den Spannkolben (1o2) eingesetzte Dichtungen (117) stirnseitig abgedichtet ist.

28. Vorrichtung nach einem oder mehreren der Ansprüche 1 bis 27,

d a d u r c h   g e k e n n z e i c h n e t ,

daß der mit einem in die Wechselkassette (6) eingreifende Kopf (23''') versehene Ansatz (22''') des Zugankers (21''') an diesen angeschraubt, vorzugsweise auf einen an diesem angeformten Gewindezapfen (111) aufgeschraubt ist.

8. Juni 1983    e-1
A 78oo

0121665

FIG. 1

A 7800

FIG. 2

40  33  39  3  21  14

4

24  32  34  41  35  37  36

31

FIG. 3

21  44  40  42  39  3  14

32  43  34  35  41  37  36

A 7800

FIG. 4

0121665

FIG. 5

FIG. 6

FIG. 7